# EUROPEAN PATENT APPLICATION

(11) **EP 0 614 163 A1**
(43) Date of publication of application: **07.09.1994**
(21) Application number: 93103229.6
(22) Date of filing: 01.03.1993
(51) Int. Cl.: G09F 9/30, G02B 6/06

(54) **Unit for optical fiber screen and process for producing the same**

(71) Applicant: MITSUBISHI RAYON CO., LTD, Tokyo (JP)
(72) Inventor: Tokuda, Shuichiro, c/o Toyohashi Plants, Toyoshashi-shi, Aichi (JP); Furukawa, Noriyuki, c/o Products Development Lab., Higashi-ku, Nagoya-shi, Aichi 461 (JP); Kinoshita, Ikuo, c/o Products Development Lab., Higashi-ku, Nagoya-shi, Aichi 461 (JP)
(74) Representative: Lehn, Werner, Dipl.-Ing.

(57) **Abstract**

A unit for an optical fiber screen is disclosed in which optical fibers (2) are bunched together at one end to form an input surface (5) of light, the other ends of the fibers are diffused on a panel (1) surface to form an exit surface of the light; the exit surface of the light is integrated with a resin layer (4) without the interposition of an air space, and the surface of the resin layer (4) is lenticulated. A process for producing the unit is also disclosed.

## Description

### BACKGROUND OF THE INVENTION

### 1. Field of the Invention

The present invention relates to a unit for an optical fiber screen or display device in which light enters through one end of the optical fibers bunched tightly together and emanates from the other end of the optical fibers arranged on a panel surface at a pitch suitable to display image or character information with magnification. Further, the present invention relates to a process for producing the unit.

### 2. Description of the Related Art

Light illuminating type display devices, wherein optical fibers are used as light conductors to display images and character information, have advantages in that such large-size display devices as those not prepared by CRT (cathode-ray tube) can be constructed, maintenance and inspection of a large number of light emitting elements, which is a problem in large-sized display devices having light emitting elements disposed on a panel surface, is unnecessary, and display parts can be thinned since an end of light incidence can be disposed at any location through optical fibers. Thus, the development of such light illuminating type display devices is anticipated.

In light illuminating type display devices, optical fibers are planted at an equal pitch on a panel surface, and several modifications are introduced at the end surfaces of light emanation so as to alleviate the sharp light directivity of the optical fibers, thereby widening the light emanating angle and viewing angle of a screen.

For producing such devices, a method has been proposed in Japanese Unexamined Patent Publication No. 59-57274, Japanese Unexamined Utility Model Publication No. 59-114587, and Japanese Unexamined Utility Model Publication No. 60-19077 in which a panel is arranged on the light emanation surface of a screen, the panel has lenses formed on its surface, and the shape of the lenses corresponds to the pitch the of optical fibers. Further, numerous methods including the following have been proposed and applied to screens using optical fibers:
A method disclosed in Japanese Unexamined Patent Publication No. 50-142198, in which transparent beads having a small diameter are arranged on the light emanation end surface of optical fibers;
a method disclosed in Japanese Unexamined Utility Model Publication No. 2-19004 in which optical fibers are planted on a transparent resin sheet and a light diffusing layer is provided at the surface of the resin sheet; and
a method in which a lens or a light diffuser is arranged on each of the light emanation end surfaces of optical fibers.

However, it is not practical to provide a lenticular part to each of the end surfaces of a large number of optical fibers planted at a small pitch in a large screen unit panel, since excessive time and labor are required. Further, currently a method in which a sheet-like material, such as a sheet of lenticular lenses and a sheet of concave lenses, is provided at the surface of light emanation has disadvantages in that the production of a large sheet-like material made of one sheet is difficult; fixing the sheet-like material on the light emanation surface is difficult; making the pitch of the lenses the same as that of planted optical fibers is difficult; and the loss of light owing to the air space between the lens surface and end surfaces of the optical fibers is significant. Thus, the method is not applicable at present.

### SUMMARY OF THE INVENTION

As a result of a study on the units for the optical fiber screen, it has been found that an arbitrary light directivity can be provided to a screen with a small loss in the quantity of light, if the tips of the optical fibers were integrated at the light emanation side with a lenticular lens without interposition of an air space at the time of processing the tips of the optical fibers for producing the screen unit.

The unit of the present invention has been developed based on the background explained above, and thus an object of the present invention is to provide a unit for an optical fiber screen in which the directivity of an optical axis (axis-1) of the unit can be arbitrarily controlled with a small loss of light, the main directivity direction of an other optical axis that intersects the axis-1 at right angles can be turned to an arbitrary direction, and the tips of the optical fibers are protected. Another object of the present invention is to provide a process for efficiently producing such a unit for an optical fiber screen.

The present invention relates to a unit for an optical fiber screen, wherein optical fibers are bunched together at one side of the ends to form a part of light incidence and the other side of the ends of the optical fibers are diffused on a panel surface to form a part of light emanation, and the unit is characterized in that the other side of the ends of the optical fibers are integrated with a resin layer without interposition of an air space, and the surface of the resin layer is formed into a lenticular shape.

Further, the present invention relates to a process for producing a unit for an optical fiber screen, wherein optical fibers are bunched together at one side of the ends to form a part of light incidence and the other side of the ends of the optical fibers are diffused on a panel surface to form partial light emanation, and the process comprises filling a suitable amount of a resinous liquid in a formwork, at the bottom of which a lenticule mold is provided, burying the end surfaces of the optical fibers planted on a panel surface in the resinous liquid, and then curing the resinous liquid to integrate with the end surfaces of the optical fibers without the interposition of an air space.

### BRIEF DESCRIPTION OF THE DRAWINGS

Fig. 1 is a perspective view illustrating an outline of the steps for producing a unit for an optical fiber screen according to one embodiment of the process of the present invention.

Fig. 2 is a perspective view of a unit for an optical fiber screen according to one embodiment of the present invention.

Fig. 3 is an enlarged cross-sectional perspective view of a resin layer used in a unit for an optical fiber screen according to one embodiment of the present invention.

Fig. 4(a) is an enlarged cross-sectional perspective view of a resin layer used in a unit for an optical fiber screen according to another embodiment of the present invention, in which the resin layer having a lenticulated surface is further formed into a saw-toothed shape and the surface of the lenticular lenses faces a suitable angle in the direction at which the optical fibers are planted; and Fig. 4(b) is a typical cross-sectional view.

Fig. 5 is a graph illustrating the light directivity of the unit for an optical fiber screen produced in the Example.

In the drawings, 1 designates a panel, 2 designates an optical fiber, 3 designates a formwork, 4 designates a resin layer, and 5 designates an end surface of light incidence.

### DESCRIPTION OF THE PREFERRED EMBODIMENTS

The present invention will now be described in detail with reference to embodiments illustrated in the accompanying drawings.

In a preferable embodiment of a unit for an optical fiber screen of the present invention, the pitch of the lenticules for the unit is 1/n (in which n is an integer) of the pitch at which the optical fibers forming a part of light emanation are planted in the panel.

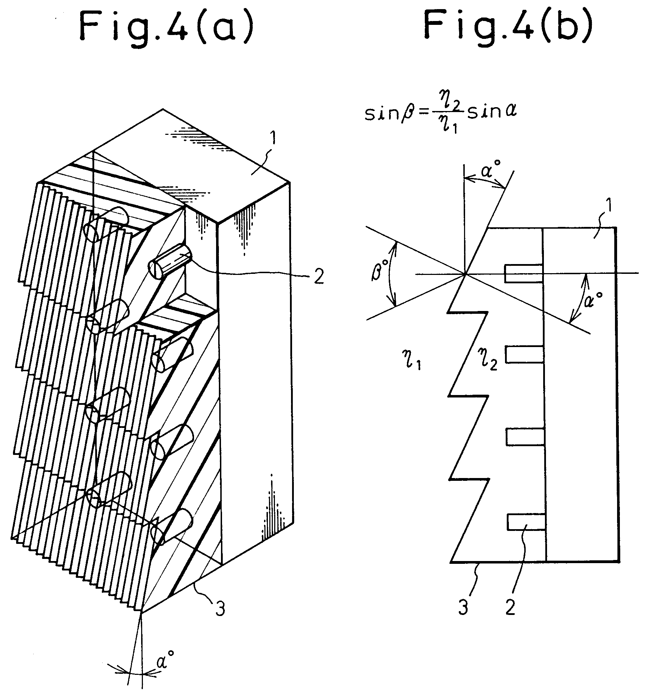

In a more preferable embodiment of the unit, the resin layer having a lenticulated surface is further formed into a saw-toothed shape at a prescribed angle, for each planting pitch of the optical fibers, in the direction of the planting of the optical fibers, as shown in Fig. 4.

In a preferable process for producing a unit for an optical fiber screen of the present invention, optical fibers are buried in a panel so that the end surfaces of the optical fibers protrude beyond the panel surface, the end surfaces of the optical fibers are arranged in a formwork at a prescribed distance from the bottom of the formwork, and a suitable amount of a resinous liquid is then filled in the formwork for curing to integrate with the optical fibers.

A unit for an optical fiber screen of the present invention functions in such a way as follows:

When light is impinged upon a part of light incidence at one end of the bunched optical fibers, the light is transmitted through the optical fibers and emanated from a part of light emanation at the other ends of the optical fibers. The light from the light emanation part directly enters a resin layer, the surface of which is formed into a lenticular shape, without passing through an air space, and then emanated from the lenticular surface to illuminate the screen.

In a specific procedure for producing a unit for an optical fiber screen of the present invention, a resinous liquid is filled in a formwork, at the bottom of which a mold for lenticules is provided, and the tips of the optical fibers protruding beyond the panel surface are buried in the resinous liquid. On this occasion, the end surfaces (tips) of the optical fibers are adhered to the resinous liquid without the interposition of an air space. The resinous liquid is then cured to integrate the optical fibers with the resin layer thus formed without interposition of an air space, thereby producing a unit for an optical fiber screen is produced.

As explained in the foregoing, a unit for optical fiber screen can be produced, according to the present invention, in which the unit light directivity of an axis (axis-1) can be arbitrarily controlled with a small loss of light, the main directivity direction of the axis that intersects the axis-1 at right angles can be turned to an arbitrary direction, and the tips of the optical fibers are protected.

### EXAMPLES

Now, the present invention will be described in further detail in reference to Examples and drawings. However, it should be understood that the present invention is by no means restricted by such Examples and drawings.

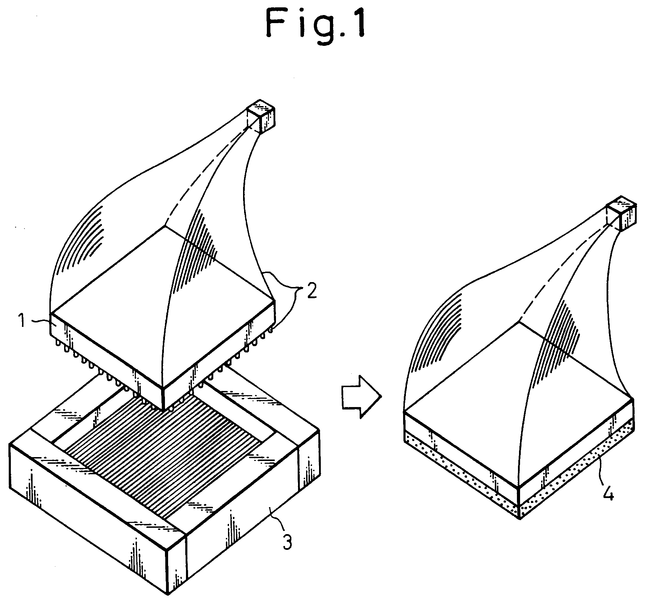

An outline of the steps for producing a unit for an optical fiber screen according to the present invention is illustrated in Fig. 1.

A bottom part of a formwork 3 is constructed with a mold for lenticular lenses and the inner surface of the formwork 3 is subjected to a surface treatment so that the resinous liquid filled in the formwork 3 can be easily separated from the formwork 3 after curing is completed.

One of the ends of the optical fibers 2 are bunched closely together and the other ends of the optical fibers 2 are planted at a suitable pitch in a panel 1. The other ends of the optical fibers 2 protrude from the surface of the panel 1 a prescribed length and are fixed to the panel by adhesion or calking with a wedge. Protrusion of the optical fibers 2 beyond the panel 1 is not an essential requirement, however, when the optical fibers 2 protrude, a stronger adhesion with a resinous layer 4 can be attained.

Next, the panel 1 is fixed to the formwork 3, in which a suitable amount of a resinous liquid is filled, under such a condition that the end surfaces of the optical fibers are kept a prescribed distance from the lenticules mold arranged at the bottom of the formwork 3. After the lapse of a certain period of time for complete curing of the resinous liquid, the resin thus formed is removed from the formwork 3 together with the panel 1, thereby obtaining a unit for an optical fiber screen in which the tips of the optical fibers 2 are integrated with the resin layer 4 having a lenticulated surface.

When air bubbles are retained on the surface of the panel 1 fixed to the formwork 3, it is sufficient achieve the object of the present invention, to subject the portion of the formwork 3 to degassing in a vacuum prior to curing the resinous liquid. Further, while the resinous liquid was cast within the formwork 3 in advance, as explained in the procedure above, the resinous liquid may be cast to fill the formwork 3 after fixing the panel 1 to the formwork 3.

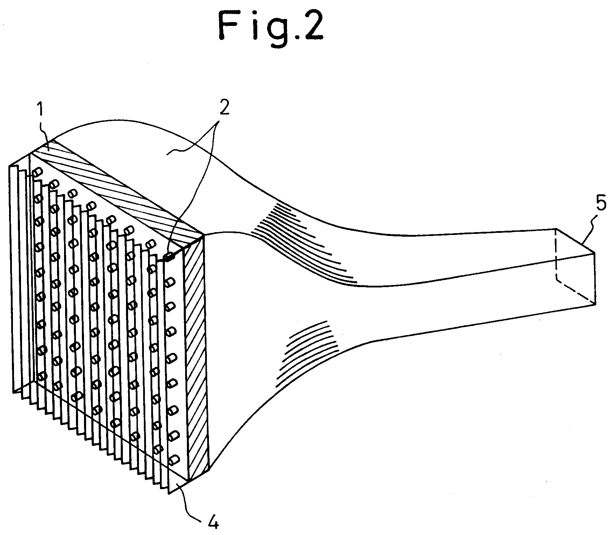

A perspective view of a unit for an optical fiber screen according to one embodiment of the present invention is shown in Fig. 2.

In the unit of this embodiment, one end of the bunch of optical fibers 2 is used as a part of light incidence, the other ends of the optical fibers diffused on a panel 1 are used as a part of light emanation, and the other ends of the optical fibers 2 are integrated with the resin layer 3 having a lenticulated surface.

A unit of image information is impinged upon the end surface of light incidence 5 of the optical fibers 2 bunched closely together, passed through the lenticular lenses, and emanated from the surface of the resin layer 4. In this embodiment, the optical fibers 2 planted in the panel 1 protruded slightly beyond the surface of the panel 1. Such an arrangement is preferable since adhesion between the optical fibers 2 and the resin layer 4 is stronger. However, the optical fibers 2 may be cut off at the surface of the panel 1.

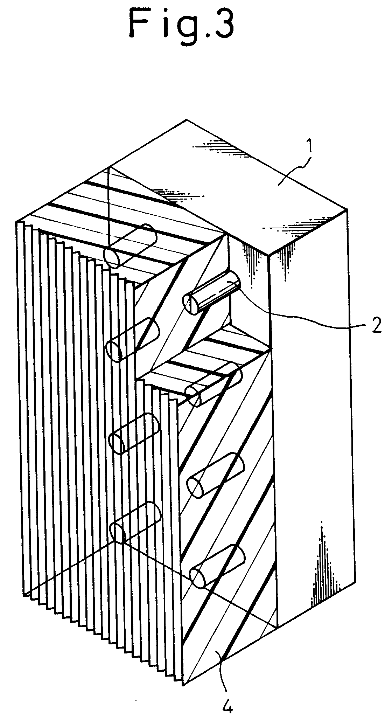

A unit for an optical fiber screen according to one embodiment of the present invention is shown in Fig. 3 in which the tips of the optical fibers 2 are integrated with the resin layer 4.

In this embodiment, the resin layer 4 is integrated with the optical fibers 2 such that the tips of the optical fibers 2 protruding from the panel 1 a certain length are embedded in the resin layer, and lenticular lenses are formed on the light emanation surface. Since the light emanation end surface of the optical fibers 2 make contact with the resin layer 4 without interposition of an air space, the light emanated from the optical fibers 2 is introduced directly and efficiently to the resin layer without scattering at the boundary face and departs the resin layer 4, even if the light emanation end surfaces of the optical fibers 2 are not subjected to grinding, when the resin layer has a suitable refractive index. The axial directivity of the emanated light is widened owing to the effect of the lenticular lenses forming on the surface of the resin layer.

In the present invention, when the direction of the lenticular lenses is vertical, the light directivity in a horizontal direction,only which is required for large-size image transmitting screens is widened. Besides, when the pitch and shape of the lenticular lenses are properly selected, optional directivity in a horizontal direction can be obtained. Further, various light directivities can be obtained through a combination of lenticular lenses having a vertical direction with those having a horizontal direction.

The pitch of the lenticular lenses may be brought in accord with that of the optical fibers 2 to be 1:1. However, when the pitch of the lenticular lenses is made to 1/n (in which n is an integer), a plural number of units can easily be combined to construct a large-sized screen without unevenness in brightness and without the occurrence of moire fringes. Further, when the pitch of the lenticular lenses becomes as fine as 0.5 mm or less, such problems as illumination reflection in which a screen is installed, and the lowering in screen contrast owing to disturbing light from outside of the screen can be solved.

The resin to be used for the resin layer is not particularly restricted if the resin has a high transparency and the same refractive index level as the optical fibers, and the resin does not impair the optical fibers. However, a resin having a small shrinkage factor and that is exothermic is preferable.

For large-size screens, a vertical direction light directivity within a range between the front face and the downward direction may sometimes be required in addition to a wide directivity in a horizontal direction. In such a case, it is proper to turn the optical fibers protruding from the panel surface in a downward direction and fix the fibers with a resin layer, and when the optical fibers are made of a plastic, the fibers can easily be turned downward by taking advantage of a heat setting.

Fig. 4(a) is an enlarged, partial, cross-sectional perspective view of a resin layer used in a unit for an optical fiber screen in which the surface of the resin is formed into a lenticular shape and the surface of the resin layer is further formed into a saw-toothed shape, for each of the planting pitchs of the optical fibers 2, along the direction of the lenticules, and thus, the surface of the resin layer faces a suitable angle to the planting direction of each of the optical fibers 2.

Fig. 4(b) is a typical cross-sectional view of the unit as shown in Fig. 4(a). Light can be efficiently introduced from the optical fibers 2 to the resin layer 4 such that the optical fibers 2 are vertically embedded in the resin layer 4, by forming the surface of the resin layer 4 into a saw-toothed shape at a prescribed, suitable angle to the planted optical fibers 2. Light of a main direction comes into the lenticular lenses formed on the surface of the resin layer 4, with an inclination angle of α degrees which is thesaw-tooth angle .

When a core material for the optical fibers 2 has the same refractive index level as that of the resin layer 4 and both indexes are higher than 1, the light emanating from the lenticular lenses is refracted in a vertical direction so that the light emanates at an angle β to the vertical direction of the lenticular lenses. Thus, a main direction of the light in a vertical direction can be arbitrarily set up by selecting a specific resin layer 4 having a proper refractive index and making the the saw-tooth angle α a proper value.

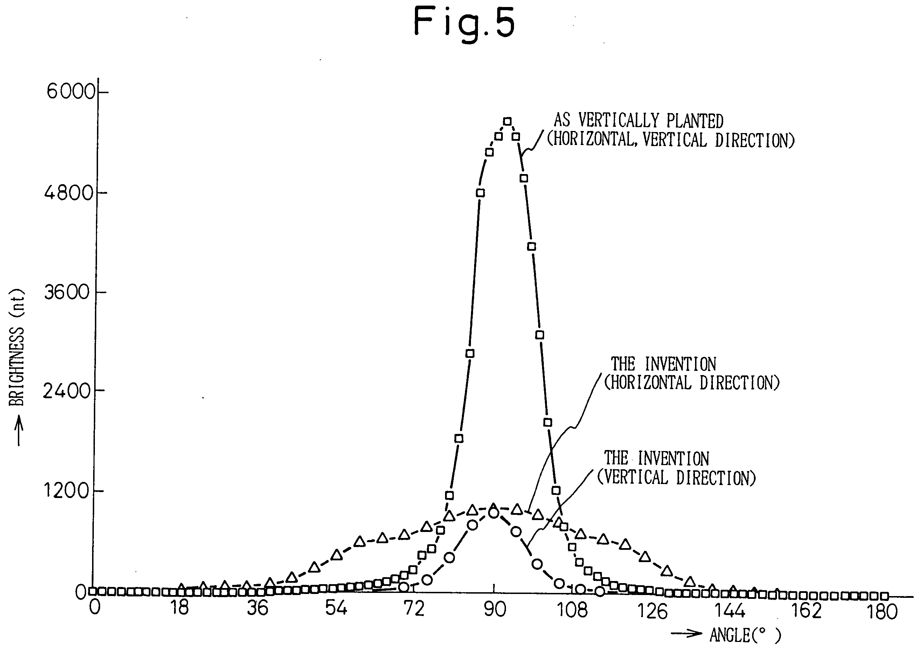

Light directivities of the units for an optical fiber screen, prepared in the Example mentioned above, were determined and the results are shown in Fig. 5.

As will be understood from Fig. 5, good results were obtained with the unit of the Example.

Conditions for preparing the unit and its main specifications were as follows:
Optical fiber: Acrylic optical fiber (Eska ® SK-30, produced by Mitsubishi Rayon Co., Ltd.) having a diameter of 0.75 mm
Fiber planting pitch: 5 mm
Number of optical fiber: 40 × 40 fibers (200 mm square)
Material of panel: Modified PPE resin (reinforced with glass fibers: 20%)
Resin A for resin layer: p-oxyphthalic acid glycelol ester-diglycidyl ester (U-Quick 103; produced by Ueno Fine Chemicals Industry, Ltd.)/tertiary fatty acid monoglycidyl ester (Cadura E10; produced by Yuka Shell Epoxy K.K.) = 90/10
Resin B for resin layer: Isophorone modified diamine (Ancamine 1618; produced by ICI Japan Limited)
Resin composition: Resin A : Resin B = 6 : 4
Refractive index of resin: 1.57
Length of protruded optical fiber: 3 mm
Thickness of resin: 1 mm from end surface of optical fiber
Pitch of lenticular lenses: 0.5 mm

## Claims

1. A unit for an optical fiber screen wherein optical fibers are bunched together at one end to form a part of light incidence and the other ends of the optical fibers are diffused on a panel surface to form a part of light emanation; characterized in that the other ends of the optical fibers are integrated with a resin layer without the interposition of an air space; the surface of the resin layer being formed into a lenticular shape.

2. The unit for an optical fiber screen according to claim 1, wherein the pitch of the lenticules is 1/n (in which n is an integer) of the pitch at which the optical fibers forming the part of light emanation are placed in the panel.

3. The unit for an optical fiber screen according to claim 1 or 2, wherein the lenticulated surface of the resin layer is formed into a saw-toothed shape at a prescribed angle, for each planting pitch of the optical fibers, in the direction of the planting of the optical fibers.

4. A process for producing a unit for an optical fiber screen wherein optical fibers are bunched together at one end to form a part of light incidence and the other ends of the optical fibers are diffused on a panel surface to form a part of light emanation; characterized by filling a resinous liquid in a formwork, at the bottom of which a mold of lenticules is provided, burying end surfaces of the optical fibers placed in a panel surface in the resinous liquid, and then curing the resinous liquid so as to integrate with the end surfaces of the optical fibers without interposition of an air space.

5. The process for producing the unit for an optical fiber screen according to claim 4, wherein the optical fibers are buried in the panel so that the end surfaces of the optical fibers protrude beyond the panel surface, arranging the end surfaces of the optical fibers in the formwork a prescribed distance from the bottom of the formwork, filling the resinous liquid in the formwork, and then curing the resinous liquid so as to integrate with the end surfaces of the optical fibers without the interposition of an air space.
